# EUROPEAN PATENT APPLICATION

(11) **EP 1 432 256 A1**
(43) Date of publication of application: **23.06.2004**
(21) Application number: 03257890.8
(22) Date of filing: 16.12.2003
(51) Int. Cl.: H04Q 7/22

(54) **TCAP/MAP network interconnection**

(30) Priority: 16.12.2002 US 434084 P; 03.12.2003 US 727942
(71) Applicant: Openwave Systems Inc., Redwood City, CA 94063 (US)
(72) Inventor: Hartmaier, Peter J., Woodinville, Washington 98077 (US)
(74) Representative: W.P. Thompson & Co.

(57) **Abstract**

The present invention includes a network interconnection in a wireless communication system and a method to send a message from a first wireless network to a second wireless network via the network interconnection. In one embodiment, the method includes receiving the message in a first format compatible with the first wireless network and translating the message from the first format directly into a second format compatible with the second wireless network.

## Description

This Application claims the benefit of United States Provisional Patent Application No. 60/434,084, filed on December 16, 2002, and entitled, "TCAP/MAP Network Interconnection (TMNI)."

### FIELD OF INVENTION

The present invention relates to wireless communication systems, and more particularly, to an interconnection for data transmission between different types of wireless networks.

### BACKGROUND

Currently, there are various types of wireless network for wireless communication, such as Code Division Multiple Access (CDMA), Time Division Multiple Access (TDMA), Global System for Mobile Communication (GSM), etc. A TDMA network delivers digital wireless service using time-division multiplexing. In general, the TDMA network divides a radio frequency into time slots and then allocates slots to multiple calls such that a single frequency can support multiple, simultaneous data channels. One type of TDMA network that allows eight simultaneous calls on the same radio frequency is the GSM network. In contrast, a CDMA network does not assign a specific frequency to each mobile communication device operating on the CDMA network. Instead, every channel in the CDMA network uses the full available spectrum, while individual messages are encoded with a pseudo-random digital sequence. Such technique is also referred to as spread-spectrum technique.

Within a common wireless network, the interchange of messages between mobile communication devices, such as cellular phones, is currently accomplished by exposing a switch of the originating wireless network serving the originating mobile communication device to the Global Title routing infrastructure. In some systems, the switch is also known as a short message service center (SMSC). Combined with matching roaming agreements, the switch serving the originating mobile communication device may find the destination mobile communication device operating on the common. wireless network or a network of the same type. However, this technique is not applicable when the destination mobile communication device is not on a network of the same type as the originating wireless network. Since different types of wireless networks send messages in different ways, the messages in a certain type of wireless network are encoded in a particular format that may not be compatible with another type of wireless network.

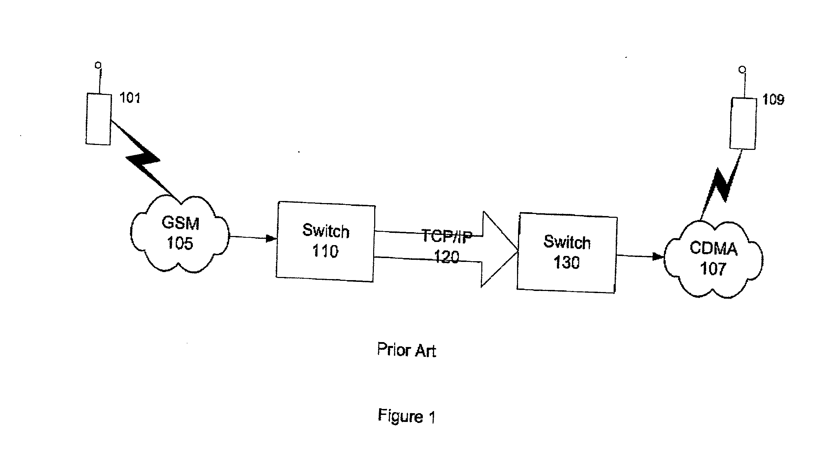

Currently, a type of messages sent between wireless networks, Short Message System (SMS) messages, also known as short messages, are sent from an originating mobile communication device to a destination mobile communication device as illustrated in Figure 1. The originating mobile communication device 101 operating on a GSM network 105 sends a short message to a switch 110. The switch 110 converts the short message into one of many protocols, typically, Short Message Peer-to-Peer (SMPP) format and sends the converted short message via a transmission control protocol / internet protocol (TCP/IP) connection 120 to another switch 130. The switch 130 serves the destination mobile communication device 109 operating on a CDMA network 107. When the switch 130 receives the short message in SMPP format, the switch 130 translates the short message from the SMPP format into a format compatible with the CDMA network 107. Then the switch 130 routes the translated short message to the destination mobile communication device 109 operating on the CDMA network 107.

Although the current methodology allows delivery of a short message from a GSM network to a CDMA network, the delivery is inefficient because the short message has to be translated into the SMPP format and then to the CDMA format. In addition to the delay in message delivery, extra hardware is also required in the system in Figure 1 to support the TCP/IP connection 120 between the switches 110 and 130.

### SUMMARY

The present invention includes a network interconnection in a wireless communication system and a method to send a message from a first wireless network to a second wireless network via the network interconnection. In one embodiment, the method includes receiving the message in a first format compatible with the first wireless network and translating the message from the first format directly into a second format compatible with the second wireless network.

In a specific embodiment of the present invention, the first wireless network is a GSM network and the second wireless network is a CDMA network.

Other features of the present invention will be apparent from the accompanying drawings and from the detailed description that follows.

### BRIEF DESCRIPTION OF THE DRAWINGS

The present invention is illustrated by way of example and not limitation in the figures of the accompanying drawings, in which like references indicate similar elements and in which:

Figure 1 illustrates an existing system for delivering a short message from a GSM network to a CDMA network;

Figure 2 illustrates one embodiment of a wireless communication system;

Figure 3 illustrates one embodiment of a process for sending a message from an originating wireless network to a destination wireless network;

Figure 4 illustrates the message flows in one embodiment of a process for sending a message from an originating wireless network to a destination wireless network; and

Figure 5 illustrates one embodiment of a network interconnection.

### DETAILED DESCRIPTION

A network interconnection and the use of which in a wireless communication system are described. In the following description, numerous specific details are set forth. However, it is understood that embodiments of the invention may be practiced without these specific details. In other instances, well-known components, structures, and techniques have not been shown in detail in order not to obscure the understanding of this description.

Some portions of the following detailed description are presented in terms of algorithms and symbolic representations of operations on data bits within a computer memory. These algorithmic descriptions and representations are the tools used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations described herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The processes and displays presented herein are not inherently related to any particular computer or other apparatus. Various general-purpose systems may be used with programs in accordance with the teachings herein, or it may prove convenient to construct more specialized apparatus to perform the operations described. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

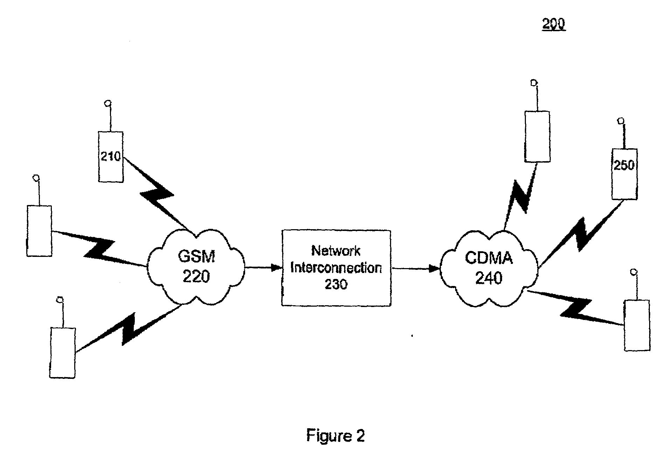

Figure 2 illustrates one embodiment of a wireless communication system 200. The system 200 includes two mobile communication devices 210 and 250, two wireless networks 220 and 240, and a network interconnection 230. The mobile communication device 210 operates on the wireless network 220, which is coupled to the other wireless network 240 via the network interconnection 230. The mobile communication device 250 operates on the wireless network 240. The wireless networks 220 and 240 are of different types, and hence, messages are routed in each of the networks 220 and 240 in different formats. To send a message from the network 220 to the network 240, the message from the network 220 is translated into a format compatible with the network 240.

The network 220 may be a GSM network, a CDMA network, or a TDMA network, etc. In one embodiment, messages from the network 220 are transmitted according to Signaling System 7 protocol (SS7). SS7 is a telecommunications protocol defined by the International Telecommunication Union (ITU) and American National Standards Institute (ANSI) to route messages using high-speed circuit switching and signaling. Likewise, the network 240 may be a GSM network, a CDMA network, or a TDMA network, etc. For the purpose of illustration, the following discussion assumes that the network 220 is a GSM network and the network 240 is a CDMA network. However, one should appreciate that the networks 220 and 240 may be of other types of network in different embodiments of the present invention.

Furthermore, one should appreciate that there may be multiple mobile communication devices operating on each of the networks 220 and 240. Moreover, the mobile communication devices 210 and 250 may include cellular phones, personal digital assistants (PDA), etc.

In one embodiment, the mobile communication device 210 sends a Short Message System (SMS) message to the mobile communication device 250. The process of sending an SMS message is well known in the art. A serving Short Message Service Center (SMSC) may receive the SMS message from the mobile communication device 210 through a mobile network. The SMSC delivers the SMS message according to a destination address contained in the SMS message. In one embodiment, the SMSC sends a SendRoutingInformation (SRI) to a Home Location Register (HLR) for the destination mobile communication device 250 using techniques well known in the art. The HLR may return with the address of a Mobile Switching System (MSC) if the mobile communication device 250 is ready to receive the SMS message. The serving SMSC then sends the message directly to the mobile communication device 250 via the MSC.

In one embodiment, the network interconnection 230 makes the CDMA network 240 to appear as a GSM subnet to the GSM network 220 such that the GSM network 220 can route the message from the mobile communication device 210 to the CDMA network 240. To interface the GSM network 220 with the CDMA network 240, the network interconnection 230 emulates various network components. One of the components the network interconnection 230 emulated is a Home Location Register (HLR). An HLR may store the profiles of some of the mobile communication devices in the network. Usually, there are multiple HLR systems in one carrier network, each with a subset of the mobile communication devices controlled by the carrier network. The HLR function in the network interconnection 230 stores profiles of the mobile communication devices operating on the CDMA network 240 in a format compatible with the GSM network. The profiles of the mobile communication devices may include information such as, for example, directory number, user profile, serial number, services authorized, validation period, etc. In one embodiment, the ranges of valid CDMA destination numbers are stored by the HLR function of the network interconnection 230. In response to the SRI of the message from a GSM network, the HLR may check a destination number in the SRI against the ranges of valid CDMA destination numbers. If the HLR function in the interconnection 230 determines that the destination number is a valid CDMA number, the HLR function returns the address of the MSC function of the network interconnection 230. Then the GSM network 220 sends the message, which is a forward short message (FSM) in the GSM standard, to the MSC function in the network interconnection 230.

In one embodiment, the network interconnection 230 performs a function to emulate a Mobile Switching Center (MSC) serving mobile communication devices. A MSC is a network element responsible for the circuit switched connection of the voice channels and the management of mobile communication devices registered within the radio coverage of the network. The network interconnection 230 may act as a MSC in response to the FSM of the message from the GSM network 220. In one embodiment, once the network interconnection 230 receives a message from a mobile communication device operating on the GSM network 220 (e.g., the mobile communication device 210), the MSC function processes the message and passes the processed message to the CDMA network 240 for routing to a destination mobile communication device operating on the CDMA network 240 if the HLR function determines that the message is for a device operating on the CDMA network 240. In one embodiment, the MSC function translates the FSM of the message from a GSM format directly into a CDMA format, and thus, allowing the CDMA network 240 to route the translated message to the destination mobile communication device 250 without further reformatting. Once the MSC function within the network interconnection 230 receives the FSM, the MSC can deliver the message in normal CDMA manner to the destination mobile communication device 250 in the CDMA network.

Unlike the existing technique discussed above with regard to Figure 1, the network interconnection 230 does not have to translate the message into an intermediate format (e.g., SMPP) in order to send the message to a CDMA network, in which the message is reformatted to be compatible with the CDMA network. Therefore, messages can be delivered with less delay.

As discussed above, the message may be a SMS message. In one embodiment, the routing information of the SMS message includes a mobile directory number (MDN) to identify the destination mobile communication device. The Global Title Translation (GTT) infrastructure of the GSM network 220 would have to recognize the MDNs of the devices operating on the CDMA network in order to route messages correctly. In one embodiment, the network interconnection 230 checks a destination number of a message received against the ranges of valid CDMA MDNs. If the MDN is within one of the valid ranges, then the network interconnection 230 reformats the message and sends the reformatted message to the CDMA network 240, which routes the message to the destination mobile communication device 250.

Note that any or all of the components of system 200 and associated hardware and/or software may be used in various embodiments of the present invention. However, it can be appreciated that other configurations of the wireless communication system may include some or all of the devices.

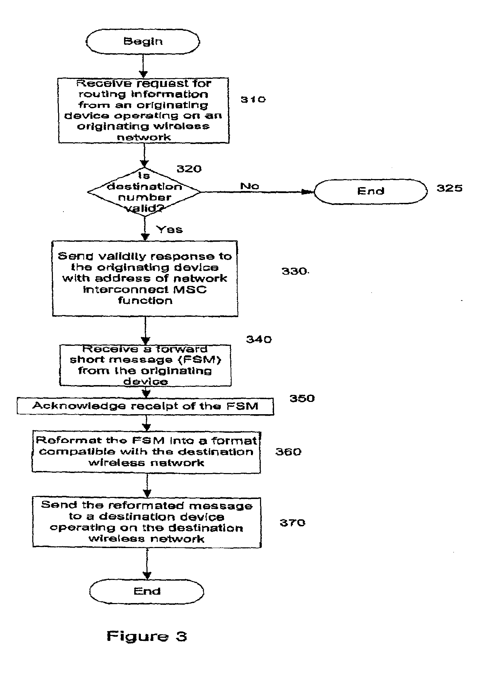

Figure 3 illustrates one embodiment of a process for sending a message from an originating mobile communication device operating on an originating wireless network to a destination mobile communication device operating on a destination wireless network. The process is performed by processing logic that may comprise hardware (e.g., circuitry, dedicated logic, etc.), software (such as is run on a general-purpose computer system or a dedicated machine), or a combination of both, such as the network interconnection 230 in Figure 2.

Referring to Figure 3, processing logic receives routing information from the originating mobile communication device via the first wireless network (processing block 310). In one embodiment, the request for routing information is also referred to as SRI. The SRI includes a destination number. In one embodiment, the destination mobile communication device is a cellular phone and the destination number is the phone number of the wireless phone, which is also known as the mobile directory number (MDN). Processing logic then checks the destination number to determine whether the destination number is within a valid range of the destination numbers associated with the destination wireless network (processing block 320). If the destination number is not valid, the process ends (processing block 325). Various end conditions can be applied to signal the originating device. Otherwise, processing logic sends a validity response to the originating wireless network to acknowledge the receipt of the routing information (processing block 330). In one embodiment, the network interconnection 230 executes a software emulating a home location register (HLR) to perform the process shown in processing blocks 310, 320, 325, and 330.

In response to the validity response, the originating wireless network sends the FSM. Processing logic receives the FSM from the originating wireless network (processing block 340). In one embodiment, processing logic acknowledges the receipt of the FSM (processing block 350). The processing logic then directly translates the FSM into a format compatible with the destination wireless network (processing block 360). In one embodiment, the FSM includes the text of the SMS message and various parameters, such as, for example, a destination identifier, a source identifier, delivery priority, etc. To directly translate the FSM, processin logic may break down the FSM and extract certain parameters from the FSM. Using the extracted parameters, processing logic rebuilds the message in a format compatible with the destination wireless network. In one embodiment, the network interconnection 230 executes a software emulating a mobile service center (MSC) to perform the process shown in processing blocks 340, 350, and 360

After the FSM has been reformatted to be compatible with the destination wireless network, processing logic sends the reformatted message to the receiving mobile communication device via the destination wireless network (processing block 370). Unlike the existing network mentioned above, processing logic does not translate the message into an intermediate format (e.g., SMPP) in order to send the message to the destination wireless network. Moreover, the destination network according to one embodiment of the present invention may route the translated message received to the destination device without further translation, conversion, or reformatting. Eliminating the intermediary operations for reformatting messages reduces message delivery time, as well as the hardware and/or software infrastructure in the system.

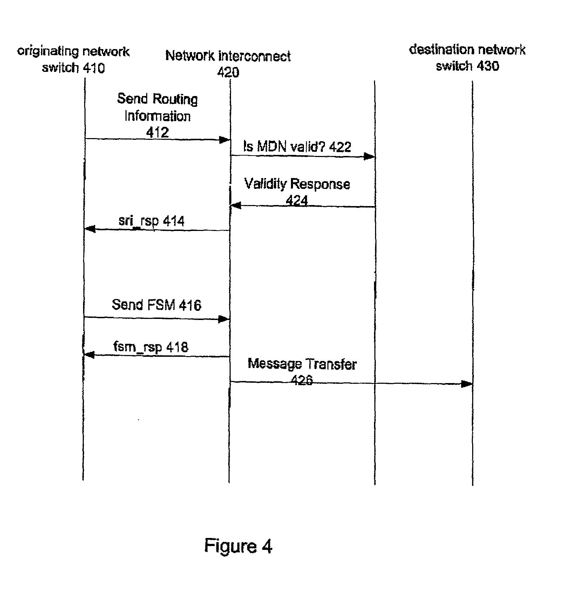

Figure 4 illustrates message flows in one embodiment of a process for sending a message from an originating wireless network to a destination wireless network. The message flows are between a switch in the originating wireless network 410, a network interconnection 420, and another switch in the destination wireless network 430. In one embodiment, the switch in the originating wireless network 410 is a Short Message Server Center (SMSC) serving the originating mobile communication device. The originating mobile communication device sends the message to the SMSC. One should appreciate that the SMSC may serve multiple mobile communication devices operating on the originating wireless network. Furthermore, the originating wireless network may include additional switches to serve other mobile communication devices.

Referring to Figure 4, the originating network switch 410 sends the request for routing information to the network interconnection 420 (message flow 412). In one embodiment, the routing information includes a MDN. Upon receiving the MDN, the network interconnection 420 checks whether the MDN is valid (operation 422). If the MDN is valid, the network interconnection 420 issues a validity response, sri_rsp 414 (operation 424). The validity response, sri_rsp 414 is sent to the switch 410 to cause the switch 410 to send the FSM of the message to the network interconnection 420 (message flow 416).

In one embodiment, the network interconnection 420 receives the FSM and sends an acknowledgement, fms_rsp 418 to the switch of the originating wireless network 410. The network interconnection 420 translates the FSM into a format compatible with the destination wireless network. To translate the FSM, the network interconnection 420 may break down the FSM and extract a number of parameters from the FSM, such as, for example, destination information, source information, and delivery priority. Using the parameters extracted, the network interconnection 420 can rebuild the FSM in a format compatible with the destination wireless network. However, one should appreciate that the parameters extracted vary among different embodiments, depending on the type of the destination wireless network. The network interconnection 420 then forwards the translated FSM to the switch of the destination wireless network 430 to be routed to a destination mobile communication device operating on the wireless network 430 (message flow 426).

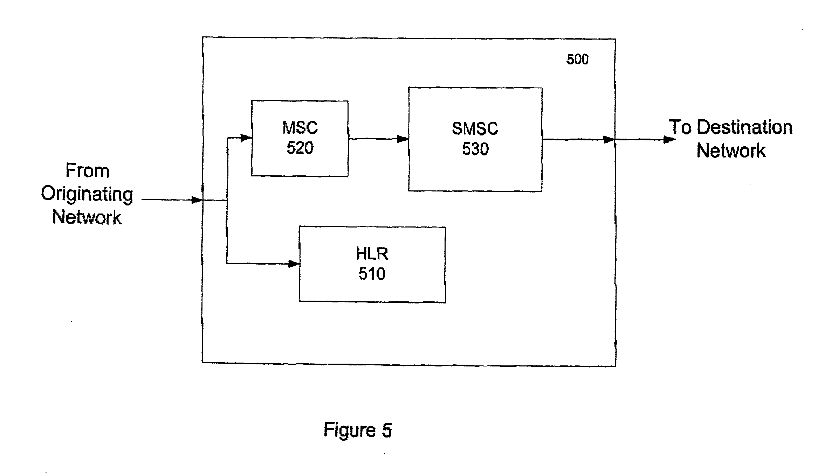

Figure 5 illustrates one embodiment of a network interconnection 500 acting as an interface between different types of wireless networks (e.g., TDMA, GSM, CDMA, etc.) in the manner described above. The network interconnection 500 includes a Home Location Register (HLR) 510, a Mobile Switching Center (MSC) 520, and a Short Message Service Center (SMSC) 530. In one embodiment, one or more of the HLR 510, MSC 520, and SMSC 530 are implemented in software. Alternately, special-purpose circuitry or a combination of software and special-purpose circuitry may be used to implement the HLR 510, MSC 520, or SMSC 530.

Referring to Figure 5, the HLR 510 stores ranges of valid destination numbers of a destination network. When the network interconnection 500 receives a destination number of a message from an originating network, the destination number is checked against the ranges in the HLR 510. If the destination number is within one of the ranges, the HLR 510 sends a validity response to the originating network. Since the HLR 510 can check the destination number of the message, the network interconnection 500 can be used as a firewall between two wireless networks to prevent certain messages from reaching a certain mobile communication device operating on the destination wireless network.

In response to the validity response from the HLR 510, the originating network forwards a FSM of the message to the network interconnection 500. Referring to Figure 5, the MSC 520 in the network interconnection 500 receives the FSM and directly translates the FSM into a format compatible with the destination network. By directly translating the FSM, the MSC 520 does not translate the FSM into an intermediate format (e.g., SMPP) to send the message to the destination network to be further translated before routing to a destination mobile communication device. The MSC 520 then forwards the translated FSM to the SMSC 530 for routing to the destination network. In one embodiment, the SMSC 530 routes the translated FSM to the destination network to be sent to a destination mobile communication device operating on the destination network without further reformatting.

In another embodiment, the network interconnection 500 couples at least two networks of the same type. The HLR function 510 returns the MSC address of the MSC function 520 in response to requests for routing information from one of the networks in order to cause messages to or from the networks to be routed through the network interconnection 500. The network interconnection 500 can, therefore, screen messages for the networks. Since the network interconnection 500 can intercept messages entering and leaving the networks, the network interconnection 500 may be used as a firewall to prevent unauthorized access to or from the networks.

The foregoing discussion merely describes some exemplary embodiments of the present invention. One skilled in the art will readily recognize from such discussion, the accompanying drawings and the claims that various modifications can be made without departing from the spirit and scope of the invention.

## Claims

1. A method to send a message from a first mobile communication device in a first wireless network to a second mobile communication device in a second wireless network, the method comprising:
receiving the message in a first format compatible with the first wireless network; and
translating the message from the first format directly into a second format compatible with the second wireless network.

2. The method of claim 1, wherein the second wireless network comprises a Code Division Multiple Access (CDMA) network.

3. The method of claim 1, wherein the first wireless network comprises a Time Division Multiple Access (TDMA) network.

4. The method of claim 1, wherein the first wireless network comprises a Global System for Mobile Communications (GSM) network.

5. The method of claim 1, wherein translating the message comprises:
extracting a plurality of parameters from the message; and
constructing a second message in the second format using the plurality of parameters.

6. The method of claim 5, wherein the plurality of parameters include destination information, source information, and delivery priority.

7. The method of claim 1, further comprising:
determining whether a destination number of the message is valid in the second wireless network; and
forwarding the transited message to the second mobile communication device if the destination number is valid.

8. The method of claim 7, further comprising:
sending an acknowledgement to cause a second part of the message, forward short message (FSM), to be forwarded to an interconnection from the first wireless network if the destination number is valid.

9. The method of claim 8, further comprising:
translating the FSM into the second format.

10. The method of claim 9, wherein translating the FSM comprises:
extracting a plurality of parameters; and
constructing a second message in the second format using the plurality of parameters.

11. An apparatus comprising:
a home location register (HLR) to store information of a plurality of mobile communication devices in a destination network; and
a mobile switching center (MSC) to translate a message from a first format to a second format compatible with the destination network and to forward the message to the destination network using the information in the HLR if the message is for a mobile communication device in the destination network.

12. The apparatus of claim 11, wherein the message is a short message system (SMS) message.

13. The apparatus of claim 11, wherein the destination network comprises a Code Division Multiple Access (CDMA) network.

14. The apparatus of claim 13, further comprising a SMS message server center (SMSC) to route the message to a non-CDMA network in response to checking a destination number of the message against the information in the HLR.

15. The apparatus of claim 14, wherein the non-CDMA network comprises an Internet.

16. The apparatus of claim 14, wherein the HLR is operable to check whether the destination number is valid in the destination network.

17. The apparatus of claim 11, wherein the MSC is operable to extract from the message a plurality of parameters including destination information, source information, and delivery priority.

18. The apparatus of claim 11, wherein. the message is from a source network and the first format is compatible with the source network.

19. The apparatus of claim 18, wherein the source network comprises a Time Division Multiple Access (TDMA) network.

20. The apparatus of claim 18, wherein the HLR and the MSC are operable as a firewall to screen messages between the source and the destination networks.

21. The apparatus of claim 18, wherein the MSC comprises:
a processor; and
a storage medium that stores instructions which, if executed by the processor, will cause the processor to perform a plurality of operations comprising:
translating the message from the first format directly into the second format, wherein the source and the destination networks are of different types.

22. The apparatus of claim 21, wherein the source network comprises a Global System for Mobile Communications (GSM) network.

23. The apparatus of claim 21, wherein the plurality of operations further comprise:
extracting a plurality of parameters from the message; and
constructing a second message in the second format using the plurality of parameters.

24. The apparatus of claim 11, further comprising:
means for receiving the message; and
means for forwarding the translated message to the destination network.
